# EUROPÄISCHE PATENTSCHRIFT

(11) **EP 1 831 060 B1**
(45) Veröffentlichungstag und Bekanntmachung des Hinweises auf die Patenterteilung: **23.09.2009**
(21) Anmeldenummer: 05821623.5
(22) Anmeldetag: 21.12.2005
(51) Int. Cl.: B60T 8/48, B60T 13/74, B60T 7/10, F16D 65/14

(54) **VERFAHREN ZUM BETRIEB EINER HYDRAULISCHEN BREMSANLAGE FÜR KRAFTFAHRZEUGE**
METHOD FOR OPERATING A HYDRAULIC BRAKING SYSTEM FOR MOTOR VEHICLES
PROCEDE POUR FAIRE FONCTIONNER UN SYSTEME DE FREINAGE HYDRAULIQUE POUR UNE AUTOMOBILE

(30) Priorität: 21.12.2004 DE 102004062720; 13.12.2005 DE 102005059937
(43) Veröffentlichungstag der Anmeldung: 12.09.2007
(73) Patentinhaber: Continental Teves AG & Co. oHG, 60488 Frankfurt am Main (DE)
(72) Erfinder: ATTAYEBI, Samir, 60326 Frankfurt am Main (DE); BLETZ, Marcus, 35789 Weilmünster (DE); HUTH, Oliver, 61476 Kronberg (DE); CHALLOUF, Mohieddine, 64569 Nauheim (DE)
(86) Internationale Anmeldenummer: PCT/EP2005/057058
(87) Internationale Veröffentlichungsnummer: WO 2006/067196

(56) Entgegenhaltungen:
- WO-A-97/29292
- WO-A-20/04089713
- WO-A-20/05075848
- DE-A1- 10 213 346

## Beschreibung

Die vorliegende Erfindung betrifft ein Verfahren zum Betrieb einer hydraulischen Bremsanlage für Kraftfahrzeuge, bestehend aus einem Betriebsbremssystem und einer Feststellbremsvorrichtung, wobei das Betriebsbremssystem ein pedalbetätigbarer, hydraulischer Druckgeber aufweist, an die zwei Bremskreise mit mindestens einer fremdansteuerbaren, hydraulischen Druckquelle angeschlossen sind, wobei jeweils einem Bremskreis eine mit Einlass- und Auslassventilen versehene hydraulisch betätigbare Vorderachs-Radbremse und eine mit Einlass- und Auslassventilen versehene hydraulisch betätigbare Hinterachs-Radbremse zugeordnet ist, und wobei die Feststellbremsvorrichtung Mittel zur Arretierung der Bremskolben der Hinterachs-Radbremsen aufweist, wobei zur Aktivierung oder Deaktivierung der Feststellbremsvorrichtung die Bremskolben mit einem von der Druckquelle zur Verfügung gestellten hydraulischen Druck beaufschlagt werden.

Aus der DE 102 13 346 A1 ist ein Verfahren bekannt, bei dem eine Betriebsbremseinrichtung einen kontinuierlichen Übergang des Bremsdrucks bzw. der Bremsenspannkraft von mindestens zwei Fahrzeugachsen auf eine erste Achse bewirkt, an der auch eine Feststellbremsvorrichtung wirkt. Dieses Verfahren wird bei einem Übergang von einer Betriebsbremsung zu einer Feststellbremsung eingesetzt. Bei Feststellbremsvorrichtungen, die zur Aktivierung oder Deaktivierung mit einem hydraulischen Druck einer Druckquelle beaufschlagt werden, ist es besonders wichtig, dass der Druckaufbau geräuscharm durchgeführt wird.

Es ist daher Aufgabe der vorliegenden Erfindung ein Verfahren zu entwickeln, das den Übergang von einer Feststellbremsung zu einer Betriebsbremsung und von einer Betriebsbremsung zu einer Feststellbremsung möglichst schnell und geräuscharm durchführt.

Diese Aufgabe wird erfindungsgemäß dadurch gelöst, dass der hydraulische Druck nach erfolgter Deaktivierung der Feststellbremsvorrichtung zumindest teilweise zur Betätigung der Vorderachs-Radbremsen verwendet wird. Durch diese Maßnahme wird das Kraftfahrzeug nach der Deaktivierung der Feststellbremsvorrichtung sicher gehalten und die Laufdauer der hydraulischen Druckquelle wird reduziert.

Eine besonders vorteilhafte Weiterbildung des erfindungsgemäßen Verfahrens sieht vor, dass folgende Verfahrensschritte durchgeführt werden:
- Schließen der den Vorderachs-Radbremsen zugeordneten Einlassventile;
- Aufbau eines hydraulischen Drucks durch die hydraulische Druckquelle in den Hinterachs-Radbremsen;
- Deaktivieren der Feststellbremsvorrichtung und Beenden des hydraulischen Druckaufbaus;
- Öffnen der den Vorderachs-Radbremsen zugeordneten Einlassventile.

Bei einer weiteren vorteilhaften Weiterbildung ist vorgesehen, dass nach dem Öffnen der den Vorderachs-Radbremsen zugeordneten Einlassventile ein weiterer Druckaufbau durch die hydraulische Druckquelle durchgeführt wird.

Die Aufgabe der vorliegenden Erfindung wird auch dadurch gelöst, dass ein in den Vorderachs-Radbremsen eingesteuerter hydraulischer Druck zumindest teilweise zur Aktivierung der Feststellbremsvorrichtung an den Hinterachs-Radbremsen verwendet wird. Durch diese Maßnahme wird erreicht, dass der zur Aktivierung der Feststellbremsvorrichtung notwendige Druckaufbau geräuscharm durchgeführt wird. Außerdem spürt der Fahrzeugführer am Bremspedal keine durch die Druckquelle hervorgerufene Druckpulsationen.

Eine besonders vorteilhafte Weiterbildung des erfindungsgemäßen Verfahrens sieht vor, dass folgende Verfahrensschritte durchgeführt werden:
- Aufbau eines hydraulischen Drucks durch die hydraulische Druckquelle oder durch den Fahrzeugführer in den Vorderachs- und Hinterachs-Radbremsen ;
- Schließen der den Vorderachs-Radbremsen zugeordneten Einlassventile und Öffnen der den Vorderachs-Radbremsen zugeordneten Auslassventile;
- Verschieben des in den Vorderachs-Radbremsen eingesteuerten Druckmittelvolumens in einen Niederdruckspeicher;
- Aufbau eines weiteren, hydraulischen Drucks durch die hydraulische Druckquelle in den Hinterachs-Radbremsen;
- Aktivieren der Feststellbremsvorrichtung und Beenden des hydraulischen Druckaufbaus;
- Öffnen der den Hinterachs-Radbremsen zugeordneten Auslassventile.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, an dem das erfindungsgemäße Verfahren durchführbar ist;
- Fig. 2: eine axiale Schnittdarstellung einer hydraulischen Radbremse für Kraftfahrzeuge, die im in Fig. 1 dargestellten Bremssystem an einer Fahrzeugachse eingesetzt wird;
- Fig. 3a,b: eine zeitliche Darstellung des hydraulischen Drucks in Vorderachs- und Hinterachs-Radbremsen bei einem Übergang von einer Feststellbremsung zu einer Betriebsbremsung und
- Fig. 4a,b: eine zeitliche Darstellung des hydraulischen Drucks und des Volumens in Vorderachs- und Hinterachs-Radbremsen bei einem Übergang von einer Betriebsbremsung zu einer Feststellbremsung.

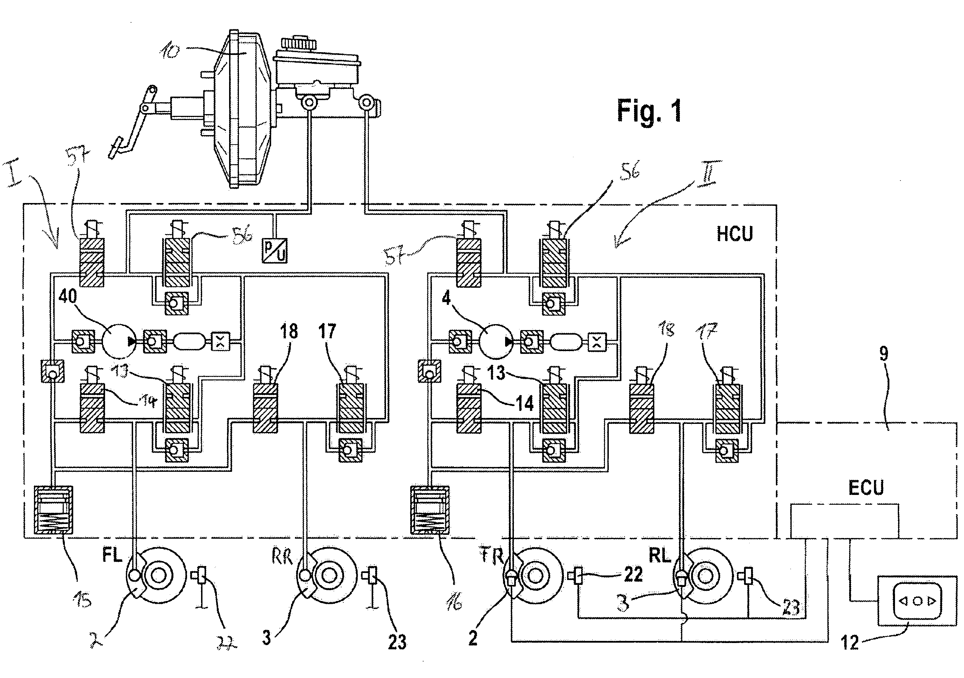

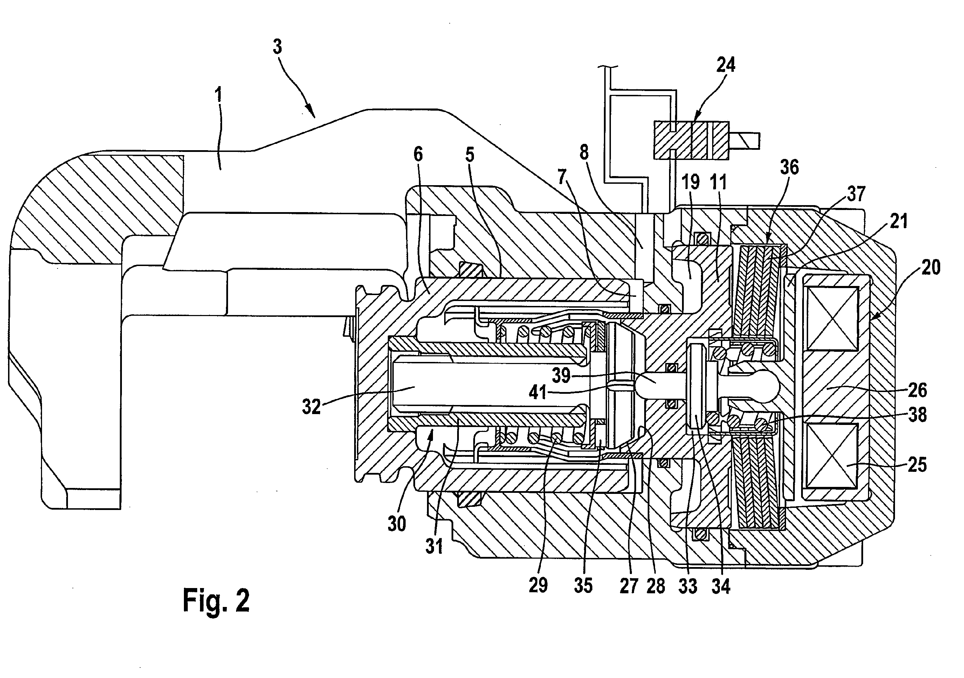

Das in Fig. 1 schematisch dargestellte Schaltbild eines Bremssystems für Kraftfahrzeuge weist zwei Bremskreise I, II auf. Jedem der beiden Bremskreise I, II ist eine Vorderachs-Radbremse 2 und eine Hinterachs-Radbremse 3 zugeordnet. Man spricht bei einer derartigen Anordnung auch von einer diagonalen Aufteilung. Die Vorderachs-Radbremsen 2 weisen im Gegensatz zu den Hinterachs-Radbremsen 3 keine Mittel zur Arretierung der Bremskolben auf. Die Hinterachs-Radbremsen 3 mit Arretierungsmitteln werden anhand von Fig. 2 noch näher beschrieben. Die Radbremsen 2, 3 werden über Einlassventile 13, 17 von einem pedalbetätigten Druckgeber 10, der in Fig. 1 als Vakuum-Bremskraftverstärker mit nachgeschaltetem Hauptbremszylinder dargestellt ist, mit Druck beaufschlagt. Der Druckabbau in den Radbremsen 2, 3 erfolgt über Auslassventile 14, 18, wodurch die Bremsflüssigkeit in Niederdruckspeicher 15, 16 gefördert wird. Außerdem weist das Bremssystem eine elektronische Steuer- und Regeleinheit 9, sowie für die Radbremsen 2, 3 an beiden Fahrzeugachsen zwei hydraulische Pumpen 4, 40 auf, die gemeinsam für die Durchführung von Anti-Blockier-Regelungen (ABS) und für Regelungen im elektronischen Stabilitätsprogramm (ESP) notwendig sind. Außerdem erzeugen die hydraulischen Pumpen 4, 40 einen zur Aktivierung und Deaktivierung der Feststellbremsvorrichtung notwendigen hydraulischen Druck, wie anhand von Fig. 2 noch näher erläutert wird. Außerdem sind Trennventile 56, 57 vorgesehen.

Die in Fig. 2 dargestellte hydraulische Hinterachs-Radbremse 3 mit integrierter Feststellbremsfunktion weist ein Bremsgehäuse 1 auf, welches den äußeren Rand einer nicht dargestellten Bremsscheibe und zwei ebenfalls nicht dargestellte Bremsbeläge umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann mittels eines hydraulischen Anschlusses 8 Bremsflüssigkeit zugeführt werden, so dass sich ein Bremsdruck aufbaut, der den Bremskolben 6 axial zur Bremsscheibe hin verschiebt. Dadurch wird der dem Bremskolben 6 zugewandte Bremsbelag gegen die Bremsscheibe gedrückt, wobei als Reaktion das Bremsgehäuse 1 sich in der entgegen gesetzten Richtung verschiebt und dadurch auch den anderen Bremsbelag gegen die Bremsscheibe drückt.

Wie Fig. 2 außerdem zu entnehmen ist, ist ein Arbeitsspeicher 36 an der dem Bremskolben 6 abgewandten Seite des Bremsgehäuses 1 angeordnet. Der Arbeitsspeicher 36 besteht im Wesentlichen aus einem hydraulischen Speicherdruckraum 19, einem den Speicherdruckraum 19 begrenzenden Speicherkolben 11 sowie einem Federelement 37, das im gezeigten Beispiel als ein Paket von Tellerfedern ausgeführt ist und sich am Speicherkolben 11 abstützt. Die im Arbeitsspeicher 36 gespeicherte Energie wirkt während eines Feststellbremsvorganges auf den Bremskolben 6, wie nachfolgend noch näher erläutert wird.

Die Mittel zur Arretierung des Bremskolbens 6, die zur Realisierung einer Feststellbremsfunktion erforderlich sind, sind bei der in Fig. 2 dargestellten Ausführung durch ein Spindelgetriebe bzw. eine Gewindemutter-Spindel-Anordnung 30 gebildet. Die erwähnte Gewindemutter-Spindel-Anordnung 30 besteht aus einer Gewindemutter 31 sowie einer Spindel 32, die mittels eines nicht selbsthemmenden Gewindes miteinander in Verbindung stehen. Dabei ist die Gewindemutter 31 mit dem Bremskolben 6 starr verbunden, während die Spindel 32 an ihrem dem Bremskolben 6 abgewandten Ende eine vorzugsweise konische erste Reibfläche 27 aufweist, die mit einer im Speicherkolben 11 verdrehgesichert angeordneten zweiten Reibfläche 28 in- und außer Eingriff bringbar ist. Zu diesem Zweck ist ein Kraftübertragungselement 39 vorgesehen, das von einer zylindrischen Stufenbohrung 33 im Speicherkolben 11 aufgenommen wird und durch ihn hindurchragt und ein Zentrallager 41 für die Spindel 32 bildet. Nach einer Relativbewegung des Kraftübertragungselementes 39 gegenüber dem Speicherkolben 11 wird die Funktion des Zentrallagers 41 aufgehoben und die beiden Reibflächen 27, 28 stehen miteinander in Eingriff, wie nachfolgend noch näher erläutert wird. Außerdem spannt eine sich am Bremsgehäuse 1 abstützende Feder 29 unter Zwischenschaltung eines Axiallagers 35 die Spindel 32 in Richtung auf die zweite Reibfläche 28 vor.

Die hydraulische Hinterachs-Radbremse ist in Fig. 2 in gelöstem Zustand der Feststellbremsvorrichtung dargestellt. Zur Verriegelung der Feststellbremsvorrichtung wird durch einen die anhand von Fig. 1 erwähnten, hydraulischen Pumpen 4, 40 zunächst sowohl im Betriebsdruckraum 7 als auch im Speicherdruckraum 19 ein hydraulischer Druck aufgebaut. Dazu muss ein elektrisch schaltbares Ventil, das vorzugsweise als ein stromlos geschlossenes (SG-) Ventil 24 ausgebildet ist, in seine offene Schaltstellung gebracht werden. Als Reaktion auf den Druckaufbau im Betriebsdruckraum 7 verschiebt sich der Bremskolben 6 in der Zeichnung nach links, während der Speicherkolben 11 in der Zeichnung nach rechts entgegen der Kraftwirkung des vorgespannten Federelements 37 verschoben wird. Bei diesem Vorgang wird das Federelement 37 komprimiert. Der Speicherkolben 11 nimmt dabei das Kraftübertragungselement 39 mit, indem sich ein am Kraftübertragungselement 39 ausgebildeter Kragen 34 am Übergang zwischen kleinerem und größerem Durchmesser der Stufenbohrung 33 abstützt. Der Speicherkolben 11 und damit das Kraftübertragungselement 39 werden durch den eben erwähnten Druckaufbau im Speicherdruckraum 19 in Fig. 2 nach rechts verschoben bis eine mit dem Kraftübertragungselement 39 in kraftübertragender Verbindung stehende Ankerplatte 21 an einem elektromagnetischen Aktuator 20 zur Anlage kommt. Bei diesem Vorgang liegt die Spindel 32 aufgrund der Kraftwirkung der Feder 29 weiterhin am Zentrallager 41 an, wodurch die beiden Reibflächen 27, 28 nicht in Eingriff treten können.

Anschließend wird der elektromagnetische Aktuator 20 bestromt, wodurch die Ankerplatte 21 in ihrer eben beschriebenen Anschlagposition vom elektromagnetischen Aktuator 20 gehalten wird. Bei einem anschließenden Druckabbau im Betriebsdruckraum 7 und im Speicherdruckraum 19 bewegt sich der Bremskolben 6 in der Zeichnung nach rechts während sich der Speicherkolben 11 nach links bewegt. Durch die Arretierung des Kraftübertragungselementes 39 wird eine Relativbewegung zwischen dem Kraftübertragungselement 39 und dem Speicherkolben 11 ermöglicht, wodurch die Funktion des Zentrallagers 41 für die Spindel 32 aufgehoben wird und die beiden Reibflächen 27, 28 miteinander in Eingriff gebracht werden. Das bereits erwähnte, vorgespannte Federelement 37 drückt den Speicherkolben 11, die aufgrund der in Eingriff gebrachten Reibflächen 27, 28 blockierte Spindel 32, die Gewindemutter 31 und damit den Bremskolben 6 in der Zeichnung nach links bzw. gegen die nicht dargestellte Bremsscheibe. Dadurch ist die Fahrzeugbremse in ihrem zugespannten Zustand verriegelt. Anschließend wird der elektromagnetische Aktuator 20 nicht mehr bestromt und die Ankerplatte 21 bzw. das Kraftübertragungselement 39 werden nicht mehr gehalten. Das Ventil 24 ist stromlos geschaltet und damit geschlossen. Die hydraulische Fahrzeugbremse benötigt also keine Energie und keinen hydraulischen Druck um die Verriegelung im zugespannten Zustand aufrecht zu erhalten, was als vorteilhaft anzusehen ist.

Zum Lösen der Verriegelung wird wiederum ein hydraulischer Druck im Betriebsdruckraum 7 sowie nach einer entsprechenden Ansteuerung des SG-Ventils 24 auch im Speicherdruckraum 19 ein hydraulischer Druck aufgebaut. Der hydraulische Druck würde wiederum den Bremskolben 6 in Fig. 2 nach links und den Speicherkolben 11 nach rechts verschieben. Allerdings ist es zur Entriegelung der Feststellbremse ausreichend, wenn der Speicherkolben 11 entlastet wird. Ein weiteres Federelement 38, welches das Kraftübertragungselement 39 zur Anlage am Übergang zwischen kleinerem und größerem Durchmesser der Stufenbohrung 33 bringt, drückt das Kraftübertragungselement 39 in Richtung der Spindel 32 und stößt die in Eingriff stehenden Reibflächen 27, 28 bei entsprechender Entlastung des Speicherkolbens 11 auf. Das Kraftübertragungselement 39 bildet anschließend wieder ein Zentrallager 41 für die Spindel 32.

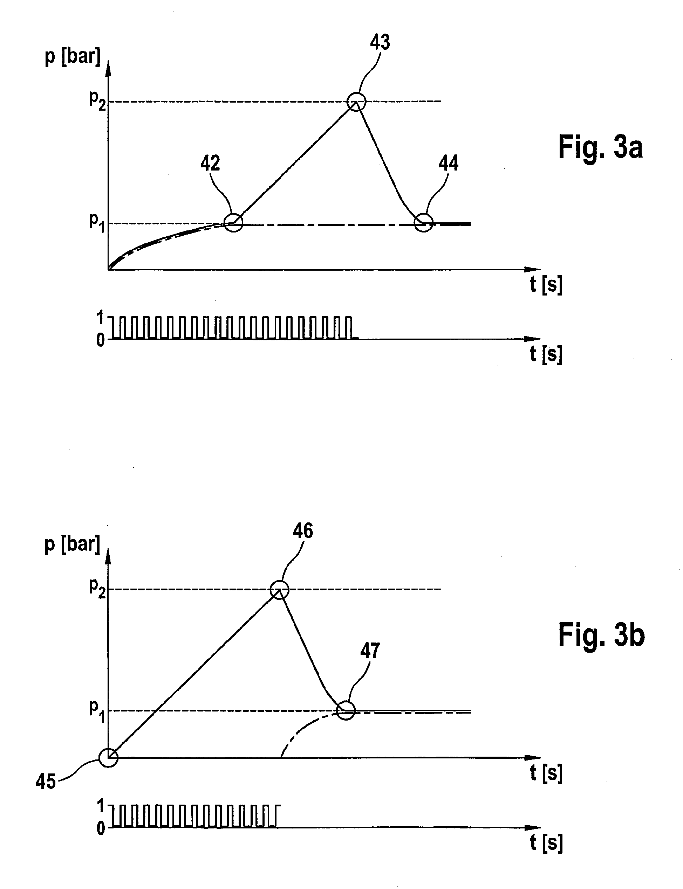

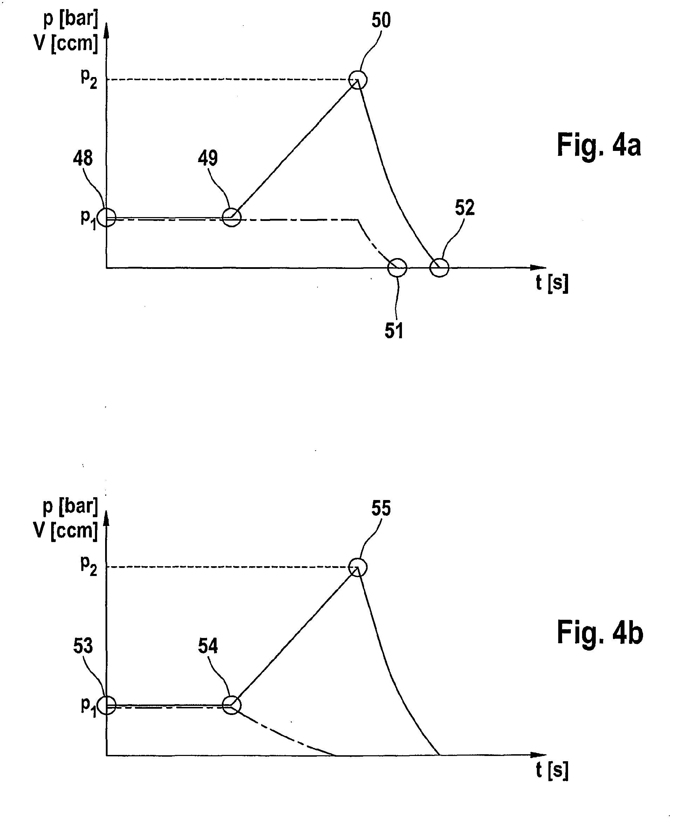

Das erfindungsgemäße Verfahren wird nun anhand von Fig. 3b und 4b in Verbindung mit Fig. 1 beschrieben. In Fig. 3a und 4a ist zur Verdeutlichung des erfindungsgemäßen Verfahrens ein vorbekanntes Verfahren dargestellt. In Fig. 3a,b und 4a,b ist der hydraulische Druck in den Vorderachs-Radbremsen 2 strichpunktiert dargestellt, während der hydraulische Druck in den Hinterachs-Radbremsen 3 mit einer durchgezogenen Linie dargestellt wird. Die Fig. 3a und 3b zeigen jeweils ein zeitliches Ablaufdiagramm eines Übergangs von einer Feststellbremsung zu einer Betriebsbremsung. Gleichzeitig ist unterhalb der Zeitachse die Laufdauer der hydraulischen Pumpen 4, 40 dargestellt. Nimmt die Darstellung den Wert "1" an sind die hydraulischen Pumpen 4, 40 eingeschaltet, während beim Wert "0" die hydraulischen Pumpen 4, 40 ausgeschaltet sind.

Um die Feststellbremsvorrichtung zu deaktivieren ist es, wie anhand von Fig. 2 beschrieben, notwendig im Betriebsdruckraum 7 und im Speicherdruckraum 19 der Hinterachs-Radbremsen 3 mit Hilfe der hydraulischen Pumpen 4, 40 einen hydraulischen Deaktivierungsdruck p₂ aufzubauen. Damit sich das Kraftfahrzeug nach erfolgter Deaktivierung der Feststellbremsvorrichtung nicht in Bewegung setzt ist es sinnvoll, in den Vorder- und Hinterachs-Radbremsen 2, 3 einen hydraulischen Druck p₁ einzusteuern. Dieser hydraulische Druck p₁ ist von der Neigung des Kraftfahrzeugs abhängig und kann mit Hilfe eines Neigungssensors ermittelt werden. Bei dem in Fig. 3a dargestellten, vorbekannten Verfahren wird deshalb zunächst in den Vorderachs- und Hinterachsradbremsen 2, 3 der eben genannte neigungsabhängige, hydraulische Druck p₁ eingesteuert, wie es bei der Position 42 dargestellt ist. Während dieses Vorgangs sind die hydraulischen Pumpen 4, 40 in Betrieb. Anschließend wird der hydraulische Druck lediglich in den Hinterachs-Radbremsen 3 weiter erhöht bis der Deaktivierungsdruck p₂ der Feststellbremsvorrichtung erreicht ist. Bis zu diesem Zeitpunkt, der mit der Position 43 bezeichnet ist, sind die hydraulischen Pumpen 4, 40 in Betrieb. Anschließend wird der hydraulische Druck in den Hinterachs-Radbremsen 3 wieder auf den neigungsabhängigen, hydraulischen Druck p₁ reduziert (Position 44).

Weniger vorteilhaft bei dem anhand von Fig. 3a beschriebenen, vorbekannten Verfahren ist, dass die hydraulischen Pumpen 4, 40 relativ lange in Betrieb sind.

Das erfindungsgemäße Verfahren sieht daher vor, dass der hydraulische Druck nach erfolgter Deaktivierung der Feststellbremsvorrichtung zumindest teilweise zur Betätigung der Vorderachs-Radbremsen 2 verwendet wird, um so die Pumpenlaufzeit zu verringern. Wie in Fig. 3b bei der Position 45 dargestellt ist, wird zunächst nur in den Hinterachs-Radbremsen 3 ein hydraulischer Druck aufgebaut. Das heißt, die anhand von Fig. 1 erwähnten Einlassventile 13 der Vorderachs-Radbremsen 2 werden geschlossen und es wird durch die hydraulischen Pumpen 4, 40 in den Hinterachs-Radbremsen 3 ein hydraulischer Druck aufgebaut. Dabei sind die den Hinterachs-Radbremsen 3 zugeordneten Einlassventile 17 geöffnet und die Auslassventile 18 geschlossen. Der Druckaufbau in den Hinterachsradbremsen 3 wird fortgesetzt bis der bereits erwähnte Deaktivierungsdruck p₂ erreicht ist, wie es Position 46 verdeutlicht. Nach dem Erreichen des Deaktivierungsdrucks p₂ werden die hydraulischen Pumpen 4, 40 außer Betrieb gesetzt und die den Vorderachs-Radbremsen 2 zugeordneten Einlassventile 13 geöffnet. Dadurch wird der hydraulische Druck in den Hinterachs-Radbremsen 3 geringer, während der hydraulische Druck in den Vorderachs-Radbremsen 2 steigt. Position 47 in Fig. 3b verdeutlicht diesen Zusammenhang. Der sich in Vorderachs- und Hinterachs-Radbremsen 2, 3 einstellende Druck entspricht in etwa dem neigungsabhängigen, hydraulischen Druck p₁. Falls der Deaktivierungsdruck p₂ in den Hinterachs-Radbremsen 3 nicht ausreicht, um in den Radbremsen 2, 3 an beiden Achsen den neigungsabhängigen, hydraulischen Druck p₁ einzustellen, wird nach dem eben erwähnten Öffnen der Einlassventile 13 der Vorderachs-Radbremsen ein weiterer Druckaufbau durch die hydraulischen Pumpen 4, 40 eingeleitet bis der neigungsabhängige, hydraulische Druck p₁ in den Radbremsen 2, 3 herrscht.

Die Idee des erfindungsgemäßen Verfahrens ist also, dass der hydraulische Druck bei einer Deaktivierung der Feststellbremse zunächst nur auf der Hinterachse bis zur Deaktivierung der Feststellbremse generiert wird. Ist die Deaktivierung abgeschlossen, dann wird der Bremsdruck von der Hinterachse an alle Radbremsen verteilt, sodass das Fahrzeug weiterhin hydraulisch gehalten werden kann. Dabei ist ein entscheidender Vorteil die Verkürzung der Pumpenlaufzeit und damit die Verringerung des durch die hydraulischen Pumpen 4, 40 verursachten Geräuschniveaus.

Die Fig. 4a und 4b zeigen jeweils ein zeitliches Ablaufdiagramm eines Übergangs von einer Betriebsbremsung zu einer Feststellbremsung. Auf der Ordinate ist sowohl der hydraulische Druck p als auch das Volumen V an hydraulischem Druckmittel in den Vorder- und Hinterachs-Radbremsen 2, 3 dargestellt. Bei dem in Fig. 4a dargestellten, vorbekannten Verfahren ist bei der Position 48 dargestellt, dass in den Vorderachs- und Hinterachs-Radbremsen 2, 3 ein hydraulischer Druck p₁ eingesteuert wurde. Dieser hydraulische Druck p₁ kann entweder durch die hydraulischen Pumpen 4, 40 im Rahmen einer Komfortfunktion oder durch den Fahrzeugführer selbst, beispielsweise durch Betätigung des pedalbetätigbaren Druckgebers 10, in den Vorderachs- und Hinterachs-Radbremsen 2, 3 eingesteuert werden. Wenn ein Übergang von dieser Betriebsbremsung zu einer Feststellbremsung gewünscht wird, wird der hydraulische Druck in den Hinterachs-Radbremsen 3 zum Zeitpunkt 49 erhöht. Wie anhand von Fig. 2 erläutert wurde, wird zur Aktivierung der Feststellbremsvorrichtung ein Aktivierungsdruck p₂ benötigt. Daher wird in den Hinterachs-Radbremsen 3 der hydraulische Druck durch die Pumpen 4, 40 aufgebaut bis dieser Druckwert erreicht ist, wie es bei der Position 50 dargestellt ist. Nach erfolgter Aktivierung der Feststellbremsvorrichtung wird der hydraulische Druck in den Vorderachs- und Hinterachsradbremsen 2, 3 wieder abgebaut bis die Radbremsen 2, 3 bei der Position 51 bzw. 52 drucklos sind.

Erfindungsgemäß ist nun vorgesehen, dass bei dem Übergang von einer Betriebsbremsung zu einer Feststellbremsung der in den Vorderachs-Radbremsen 2 eingesteuerte hydraulische Druck zumindest teilweise zur Aktivierung der Feststellbremsvorrichtung an den Hinterachs-Radbremsen 3 verwendet wird. Das Verfahren wird im Folgenden anhand von Fig. 4b beschrieben: Nach einem durch die Pumpen 4, 40 oder den Fahrzeugführer in den Vorderachs- und Hinterachsradbremsen 2, 3 eingesteuerten Druck p₁ werden die den Vorderachs-Radbremsen 2 zugeordneten Einlassventile 13 geschlossen und die Auslassventile 14 geöffnet. Dadurch wird das Druckmittelvolumen der Vorderachs-Radbremsen 2 in die Niederdruckspeicher 15, 16 verschoben. Gleichzeitig wird der hydraulische Druck in den Hinterachs-Radbremsen 3 erhöht, wie es bei Position 54 dargestellt ist. Dabei saugen die hydraulischen Pumpen 4, 40 das aus den Vorderachs-Radbremsen 2 in die Niederdruckspeicher 15, 16 abgelassene Druckmittelvolumen an. Der Druckaufbau in den Hinterachs-Radbremsen 3 wird so lange fortgesetzt bis der Aktivierungsdruck p₂ erreicht wird (Position 55) und die Feststellbremsvorrichtung aktiviert wird. Anschließend werden die den Hinterachs-Radbremsen zugeordneten Auslassventile 18 geöffnet und der hydraulische Druck in den Hinterachs-Radbremsen 3 abgebaut.

Die Idee des erfindungsgemäßen Verfahrens ist also, dass der hydraulische Druck bzw. das hydraulische Druckmittelvolumen der Vorderachs-Radbremsen 2 aus einer Betriebsbremsung heraus für den Aufbau des zur Durchführung einer Feststellbremsung notwendigen Aktivierungsdrucks verwendet wird. Dabei ist ein entscheidender Vorteil die Verringerung des durch die hydraulischen Pumpen 4, 40 verursachten Geräuschniveaus. Außerdem werden bei dem erfindungsgemäßen Verfahren beim Druckaufbau die anhand von Fig. 1 erwähnten Trennventile 56, 57 geschlossen, sodass durch die Pumpen 4, 40 hervorgerufene Druckpulsationen für den Fahrzeugführer am Bremspedal nicht spürbar sind. Durch ein Schließen der Trenneventile 56, 57 wird außerdem erreicht, dass der Fahrzeugführer nicht entgegen die Wirkrichtung der hydraulischen Pumpen 4, 40 einen hydraulischen Druck aufbaut.

### Bezugszeichenliste

1 Bremsgehäuse
2 Vorderachs-Radbremsen
3 Hinterachs-Radbremsen
4 hydraulische Pumpe
5 Bremszylinder
6 Bremskolben
7 Betriebsdruckraum
8 hydraulischer Anschluss
9 Steuer- und Regeleinheit
10 pedalbetätigbarer Druckgeber
11 Speicherkolben
12 Bedienelement
13 Einlassventile Vorderachse
14 Auslassventile Vorderachse
15 Niederdruckspeicher
16 Niederdruckspeicher
17 Einlassventile Hinterachse
18 Auslassventile Hinterachse
19 Speicherdruckraum
20 elektromagnetischer Aktuator
21 Ankerplatte
22 Raddrehzahlsensoren Vorderachse
23 Raddrehzahlsensoren Hinterachse
24 hydraulisches SG-Ventil
25 Spule
26 Joch
27 Reibfläche
28 Reibfläche
29 Feder
30 Gewindemutter-Spindel-Anordnung
31 Gewindemutter
32 Spindel
33 Stufenbohrung
34 Kragen
35 Axiallager
36 Arbeitsspeicher
37 Federelement
38 Federelement
39 Kraftübertragungselement
40 hydraulische Pumpe
41 Zentrallager
56 Trennventile
57 Trennventile

## Patentansprüche

1. Verfahren zum Betrieb einer hydraulischen Bremsanlage für Kraftfahrzeuge, bestehend aus einem Betriebsbremssystem und einer Feststellbremsvorrichtung, wobei das Betriebsbremssystem ein pedalbetätigbarer, hydraulischer Druckgeber (10) aufweist, an die zwei Bremskreise (I, II) mit mindestens einer fremdansteuerbaren, hydraulischen Druckquelle (4, 40) angeschlossen sind, wobei jeweils einem Bremskreis (I, II) eine mit Einlass- und Auslassventilen (13, 14) versehene hydraulisch betätigbare Vorderachs-Radbremse (2) und eine mit Einlass- und Auslassventilen (17, 18) versehene hydraulisch betätigbare Hinterachs-Radbremse (3) zugeordnet ist, und wobei die Feststellbremsvorrichtung Mittel zur Arretierung der Bremskolben der Hinterachs-Radbremsen (3) aufweist, wobei zur Aktivierung oder Deaktivierung der Feststellbremsvorrichtung die Bremskolben mit einem von der Druckquelle (4, 40) zur Verfügung gestellten hydraulischen Druck beaufschlagt werden, **dadurch gekennzeichnet, dass** der hydraulische Druck nach erfolgter Deaktivierung der Feststellbremsvorrichtung zumindest teilweise zur Betätigung der Vorderachs-Radbremsen (2) verwendet wird.

2. Verfahren nach Anspruch 1, **dadurch gekennzeichnet, dass** folgende Verfahrensschritte durchgeführt werden:
- Schließen der den Vorderachs-Radbremsen (2) zugeordneten Einlassventile (13);
- Aufbau eines hydraulischen Drucks durch die hydraulische Druckquelle (4, 40) in den Hinterachs-Radbremsen (3);
- Deaktivieren der Feststellbremsvorrichtung und Beenden des hydraulischen Druckaufbaus;
- Öffnen der den Vorderachs-Radbremsen (2) zugeordneten Einlassventile (13).

3. Verfahren nach Anspruch 2, **dadurch gekennzeichnet, dass** nach dem Öffnen der den Vorderachs-Radbremsen (2) zugeordneten Einlassventile (13) ein weiterer Druckaufbau durch die hydraulische Druckquelle (4, 40) durchgeführt wird.

4. Verfahren nach einem der vorhergehenden Ansprüche, **dadurch gekennzeichnet, dass** ein in den Vorderachs-Radbremsen (2) eingesteuerter hydraulischer Druck zumindest teilweise zur Aktivierung der Feststellbremsvorrichtung an den Hinterachs-Radbremsen (3) verwendet wird.

5. Verfahren nach Anspruch 4, **dadurch gekennzeichnet, dass** folgende Verfahrensschritte durchgeführt werden:
- Aufbau eines hydraulischen Drucks durch die hydraulische Druckquelle (4, 40) oder durch den Fahrzeugführer in den Vorderachs- und Hinterachs-Radbremsen (2, 3);
- Schließen der den Vorderachs-Radbremsen (2) zugeordneten Einlassventile (13) und Öffnen der den Vorderachs-Radbremsen (2) zugeordneten Auslassventile (14);
- Verschieben des in den Vorderachs-Radbremsen (2) eingesteuerten Druckmittelvolumens in einen Niederdruckspeicher (15, 16);
- Aufbau eines weiteren, hydraulischen Drucks durch die hydraulische Druckquelle (4, 40) in den Hinterachs-Radbremsen (3);
- Aktivieren der Feststellbremsvorrichtung und Beenden des hydraulischen Druckaufbaus;
- Öffnen der den Hinterachs-Radbremsen (2) zugeordneten Auslassventile (18).

## Claims

1. Method for operating a hydraulic brake installation for motor vehicles, consisting of a service-brake system and of a parking-brake device, the service-brake system having a pedal-actuable hydraulic pressure generator (10) to which two brake circuits (I, II) having at least one externally activatable hydraulic pressure source (4, 40) are connected, in each case a brake circuit (I, II) being assigned a hydraulically actuable front-axle wheel brake (2), provided with inlet and outlet valves (30, 14), and a hydraulically actuable rear-axle wheel brake (3), provided with inlet and outlet valves (17, 18), and the parking-brake device having means for locking the brake pistons of the rear-axle wheel brakes (3), for the activation or deactivation of the parking-brake device the brake pistons being acted upon with a hydraulic pressure made available by the pressure source (4, 40), **characterized in that,** after the deactivation of the parking-brake device has taken place, the hydraulic pressure is used at least partially for actuating the front-axle wheel brakes (2).

2. Method according to Claim 1, **characterized in that** the following method steps are carried out:
- closing of the inlet valves (13) assigned to the front-axle wheel brakes (2);
- build-up of a hydraulic pressure in the rear-axle wheel brakes (3) by means of the hydraulic pressure source (4, 40);
- deactivation of the parking-brake device and termination of the hydraulic pressure build-up;
- opening of the inlet valves (13) assigned to the front-axle wheel brakes (2).

3. Method according to Claim 2, **characterized in that,** after the opening of the inlet valves (13) assigned to the front-axle wheel brakes (2), a further pressure build-up by means of the hydraulic pressure source (4, 40) is carried out.

4. Method according to one of the preceding claims, **characterized in that** a hydraulic pressure fed into the front-axle wheel brakes (2) is used at least partially for activating the parking-brake device on the rear-axle wheel brakes (3).

5. Method according to Claim 4, **characterized in that** the following method steps are carried out:
- build-up of a hydraulic pressure in the front-axle and rear-axle wheel brakes (2, 3) by means of the hydraulic pressure source (4, 40) or by the vehicle driver;
- closing of the inlet valves (13) assigned to the front-axle wheel brakes (2) and opening of the outlet valves (14) assigned to the front-axle wheel brakes (2);
- displacement of the pressure-medium volume fed into the front-axle wheel brakes (2) into a low-pressure accumulator (15, 16);
- build-up of a further hydraulic pressure in the rear-axle wheel brakes (3) by means of the hydraulic pressure source (4, 40);
- activation of the parking-brake device and termination of the hydraulic pressure build-up;
- opening of the outlet valves (18) assigned to the rear-axle wheel brakes (2).

## Revendications

1. Procédé pour faire fonctionner une installation de freinage hydraulique pour véhicules automobiles, constituée d'un système de frein de service et d'un dispositif de frein de stationnement, le système de frein de service présentant un générateur de pression (10) hydraulique actionnable par une pédale, auquel sont raccordés deux circuits de freinage (I, II) avec au moins une source de pression hydraulique (4, 40) pouvant être commandée à distance, un frein de roue d'essieu avant (2) actionnable hydrauliquement et pourvu de soupapes d'entrée et de sortie (13, 14) et un frein de roue d'essieu arrière (3) actionnable hydrauliquement et pourvu de soupapes d'entrée et de sortie (17, 18) étant associés à un circuit de freinage (I, II) respectif, le dispositif de frein de stationnement présentant des moyens de verrouillage des pistons de frein des freins de roue de l'essieu arrière (3), les pistons de frein étant sollicités avec une pression hydraulique fournie par la source de pression (4, 40) afin d'activer ou de désactiver le dispositif de frein de stationnement, **caractérisé en ce que** la pression hydraulique est utilisée au moins en partie pour l'actionnement des freins de roue de l'essieu avant (2) après la désactivation effective du dispositif de frein de stationnement.

2. Procédé selon la revendication 1, **caractérisé en ce que** l'on met en oeuvre les étapes de procédé suivantes :
- fermeture des soupapes d'entrée (13) associées aux freins de roue de l'essieu avant (2) ;
- augmentation d'une pression hydraulique par la source de pression hydraulique (4, 40) dans les freins de roue de l'essieu arrière (3) ;
- désactivation du dispositif de frein de stationnement et arrêt de l'augmentation de la pression hydraulique ;
- ouverture des soupapes d'entrée (13) associées aux freins de roue de l'essieu avant (2).

3. Procédé selon la revendication 2, **caractérisé en ce qu'**après l'ouverture des soupapes d'entrée (13) associées aux freins de roue de l'essieu avant (2), on met en oeuvre une nouvelle augmentation de pression par la source de pression hydraulique (4, 40).

4. Procédé selon l'une quelconque des revendications précédentes, **caractérisé en ce qu'**une pression hydraulique commandée dans les freins de roue de l'essieu avant (2) est utilisée au moins en partie pour l'activation du dispositif de frein de stationnement au niveau des freins de roue de l'essieu arrière (3).

5. Procédé selon la revendication 4, **caractérisé en ce que** l'on met en oeuvre les étapes de procédé suivantes :
- augmentation d'une pression hydraulique par la source de pression hydraulique (4, 40) ou par le conducteur du véhicule dans les freins de roue de l'essieu avant et de l'essieu arrière (2, 3) ;
- fermeture des soupapes d'entrée (13) associées aux freins de roue de l'essieu avant (2) et ouverture des soupapes de sortie (14) associées aux freins de roue de l'essieu avant (2) ;
- déplacement du volume de fluide sous pression commandé dans les freins de roue de l'essieu avant (2) dans un accumulateur basse pression (15, 16) ;
- augmentation d'une autre pression hydraulique par la source de pression hydraulique (4, 40) dans les freins de roue de l'essieu arrière (3) ;
- activation du dispositif de frein de stationnement et arrêt de l'augmentation de la pression hydraulique ;
- ouverture des soupapes de sortie (18) associées aux freins de roue de l'essieu arrière (2).
